# FASCICULE DE BREVET EUROPEEN

(11) **EP 2 868 725 B1**
(45) Date de publication et mention de la délivrance du brevet: **06.06.2018**
(21) Numéro de dépôt: 14188584.8
(22) Date de dépôt: 13.10.2014
(51) Int. Cl.: C09J 5/00

(54) **Procédé et dispositif de pose par collage d'insert par polymérisation contrôlée.**
Verfahren und Vorrichtung zum Verlegen durch Verklebung eines Einsatzes durch kontrollierte Polymerisierung
Method and device for gluing an insert by controlled polymerisation

(30) Priorité: 25.10.2013 FR 1302473
(43) Date de publication de la demande: 06.05.2015
(73) Titulaire: Thales, 92400 Courbevoie (FR)
(72) Inventeur: Jouanne, Pierre, 31100 TOULOUSE (FR); Legrand, Silvain, 31100 TOULOUSE (FR); Damiano, Olivier, 31100 TOULOUSE (FR)
(74) Mandataire: Lucas, Laurent Jacques

(56) Documents cités:
- WO-A1-2011/049564
- US-A1- 2005 277 867
- DATABASE WPI Week 199703 Thomson Scientific, London, GB; AN 1997-025097 XP002724894, -& JP H08 285966 A (CITIZEN WATCH CO LTD) 1 novembre 1996 (1996-11-01)

## Description

La présente invention concerne le domaine de la pose d'insert dans une structure, et plus particulièrement elle porte sur un procédé et un dispositif adapté pour la pose par collage d'insert au moyen d'une colle dont la polymérisation est initiée ou accélérée dans le véhicule de pose, avant la pose de l'insert dans la structure.

La pose d'insert sur une structure est une technique largement répandue pour permettre la fixation d'équipements à la structure. Un exemple courant est la pose de cheville sur un mur permettant de fixer par une vis coopérant avec la cheville un équipement sur le mur. Dans le domaine aérospatial et aéronautique, on a recours à la pose d'inserts pour fixer des équipements sur des panneaux de structure d'un satellite ou d'un aéronef. On connait en particulier des panneaux de structure pour satellite, communément dénommés panneaux sandwich, en matériaux composites aluminium ou carbone présentant une structure en nid d'abeille, mis en oeuvre pour réaliser la structure porteuse du satellite ou pour supporter des générateurs solaires. Pour permettre l'assemblage de la structure ou la fixation d'équipements, ces panneaux sont munis de nombreux inserts répartis sur la surface du panneau.

Selon une première technique connue, l'insert peut être traversant. L'insert comprend par exemple une vis montée sur une face du panneau et un écrou sur l'autre face du panneau. Un taraudage aménagé dans la vis permet la fixation d'un équipement sur le panneau. Cette technique présente toutefois l'inconvénient d'une masse élevée de l'insert.

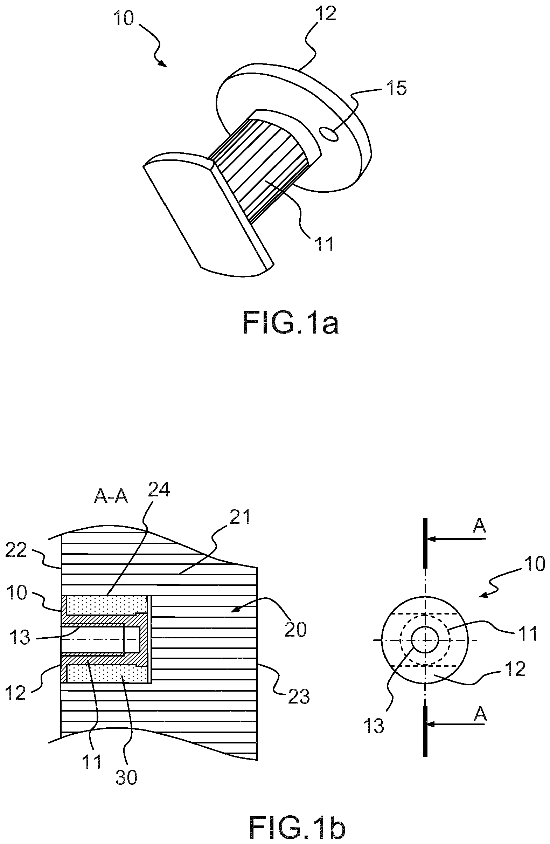

Selon une seconde technique connue, l'insert peut être non traversant, permettant un allègement significatif de l'insert. L'insert peut être fixé par collage dans un orifice aménagé dans la structure. Dans cet exemple, illustré par les figures 1a et 1b, l'insert 10 comprend un corps 11 sensiblement cylindrique et une collerette 12. Dans une mise en oeuvre connue donnée à titre d'exemple, le corps 11 présente un diamètre extérieur de cinq à sept mm, et la collerette 12 un diamètre de onze mm. La structure 20 est un panneau constitué d'une structure interne en nid d'abeille 21, et comprenant deux surfaces externes 22 et 23 généralement en aluminium ou en carbone. L'insert 10 est posé dans un orifice 24 du panneau 20. L'orifice 24 est configuré de façon à ce que, lorsque l'insert 10 est en butée contre le fond de l'orifice 24, la surface externe de la collerette 12 de l'insert soit affleurante de la surface externe 22 du panneau. L'insert comprend généralement un taraudage 13 dans le corps 11, sensiblement coaxial avec celui-ci, permettant la fixation d'équipements à la structure. L'insert est rendu solidaire du panneau au moyen d'une colle 30 déposée dans l'orifice 24. Aux fins de ce dépôt, l'insert comprend deux conduits débouchants dans la collerette 12. Un premier conduit 15 permet l'injection de colle dans l'orifice 24, et un second conduit permet l'évacuation de l'air présent dans l'orifice. La pose de l'insert est généralement réalisée manuellement. L'insert est tout d'abord déposé dans l'orifice. La colle préalablement préparée et mise en oeuvre dans une seringue est ensuite injectée dans l'orifice au travers du conduit 15 de l'insert. Des techniques connues de collage d'insert sont décrites dans les demandes de brevet JP H08 285966 A, WO 2011/049564 A1 et US 2005/277867 A1. Dans le cas fréquent d'une colle bi-composants, la colle est stockée en deux phases, une première phase étant constituée d'une résine polymérisable et une seconde phase étant constituée d'un durcisseur permettant d'initier la polymérisation de la résine après mise en contact avec cette dernière. Le mélange des deux phases est une étape délicate. Il convient d'assurer une bonne homogénéité du mélange, tout en évitant la création de bulles d'air au sein de la colle susceptibles de créer des défauts ultérieurs de tenue mécanique de l'insert dans le panneau.. La durée d'utilisation de la colle, généralement dénommée « pot-life » est limitée. Les étapes de mélange, d'intégration de la colle dans la seringue et d'injection de la colle dans l'insert monté sur le panneau, doivent donc être réalisées dans un temps très court. De plus, la viscosité élevée de la colle complique la manipulation et l'injection de la colle. Des bulles d'air sont susceptibles d'être générées lors du dépôt de la colle dans les anfractuosités de l'orifice et de l'insert.

Pour améliorer les cadences de production, on a tenté d'automatiser le procédé de pose d'insert. Mais en raison de ces difficultés de maitrise de la qualité du mélange et du dépôt, et de durée de vie limitée de la colle, ces procédés automatisés restent complexes, onéreux et les cadences de production limitées. En pratique, la pose d'insert reste généralement manuelle, en assurant à intervalles réguliers la préparation de faibles quantités de colle.

Il est donc désirable de disposer d'un procédé de pose d'insert permettant de s'affranchir des difficultés précitées. Pour permettre la mise en oeuvre de procédés automatisés efficaces, une meilleure maitrise du processus de préparation, d'application et de polymérisation de la colle est recherchée.

A cet effet, l'invention a pour objet un procédé de pose par collage d'un insert dans un orifice aménagé dans une structure, comprenant :
- une première étape consistant à assembler un véhicule de pose comprenant un insert à poser, un applicateur et une colle polymérisable,
- une seconde étape consistant à initier la polymérisation de la colle dans le véhicule de pose,
- une troisième étape consistant à poser l'insert et la colle dans l'orifice de la structure, en déclenchant l'applicateur du véhicule de pose appliqué contre la structure.

Avantageusement, la colle est une colle bi-composants comprenant une résine et un durcisseur dont la mise en contact avec la résine permet d'initier la polymérisation de la colle.

Avantageusement, le procédé comprend une étape préliminaire de micro-encapsulation de la colle, sous la forme de micro-capsules de résine et de durcisseur; la seconde étape de polymérisation de la colle étant initiée par rupture des micro-capsules permettant de mettre en contact la résine et le durcisseur.

Avantageusement, la seconde étape de polymérisation est initiée par élévation de température du véhicule de pose.

Avantageusement, la seconde étape est initiée par exposition du véhicule de pose à un rayonnement électromagnétique.

Avantageusement, le rayonnement électromagnatique est un rayonnement ultra-violet.

Avantageusement, la première étape d'assemblage du véhicule de pose comprend une première sous-étape consistant à fixer l'insert dans une enceinte ouverte de l'applicateur; et une seconde sous-étape consistant à déposer la colle dans l'enceinte ouverte en recouvrant au moins partiellement l'insert.

Avantageusement, le procédé comprend une ou plusieurs étapes automatisées.

L'invention porte également sur un véhicule de pose destiné à poser un insert dans un orifice aménagé dans une structure, comprenant l'insert à poser, une colle polymérisable, et un applicateur; l'applicateur comprenant :
- une enceinte ouverte dans laquelle peuvent être maintenus l'insert et la colle;
- des moyens de déploiement aptes à repousser l'insert et la colle hors de l'enceinte ouverte pour permettre la pose de l'insert dans l'orifice de la structure ;
le véhicule de pose étant configuré pour permettre d'initier la polymérisation de la colle maintenue dans l'enceinte ouverte de l'applicateur.

Avantageusement, la colle est une colle bi-composants comprenant une résine et un durcisseur dont la mise en contact avec la résine permet d'initier la polymérisation de la colle.

Avantageusement, la colle est micro-encapsulée sous la forme de micro-capsules de résine et de durcisseur; la polymérisation de la colle pouvant être initiée par rupture des micro-capsules permettant de mettre en contact la résine et le durcisseur.

Avantageusement, le véhicule de pose peut être configuré pour permettre une élévation de température de la colle dans l'enceinte ouverte de l'applicateur apte à initier la polymérisation de la colle.

Avantageusement, le véhicule de pose peut être configuré pour permettre une exposition de la colle dans l'enceinte ouverte de l'applicateur à un rayonnement électromagnétique apte à initier la polymérisation de la colle.

Avantageusement, le rayonnement électromagnétique est un rayonnement ultra-violet.

L'invention sera mieux comprise et d'autres avantages apparaîtront à la lecture de la description détaillée des modes de réalisation donnés à titre d'exemple sur les figures suivantes.
Les figures 1a et 1b, déjà présentées, représentent un insert fixé par collage à une structure selon l'état connu de la technique,
la figure 2 représente un exemple de composant micro-encapsulé pouvant être mis en oeuvre dans un dispositif et un procédé de pose d'insert selon l'invention,
la figure 3 illustre un exemple de dispositif et de procédé de pose d'insert selon l'invention,
la figure 4 illustre des étapes d'un procédé de pose d'insert selon l'invention.

Par souci de clarté, les mêmes éléments porteront les mêmes repères dans les différentes figures.

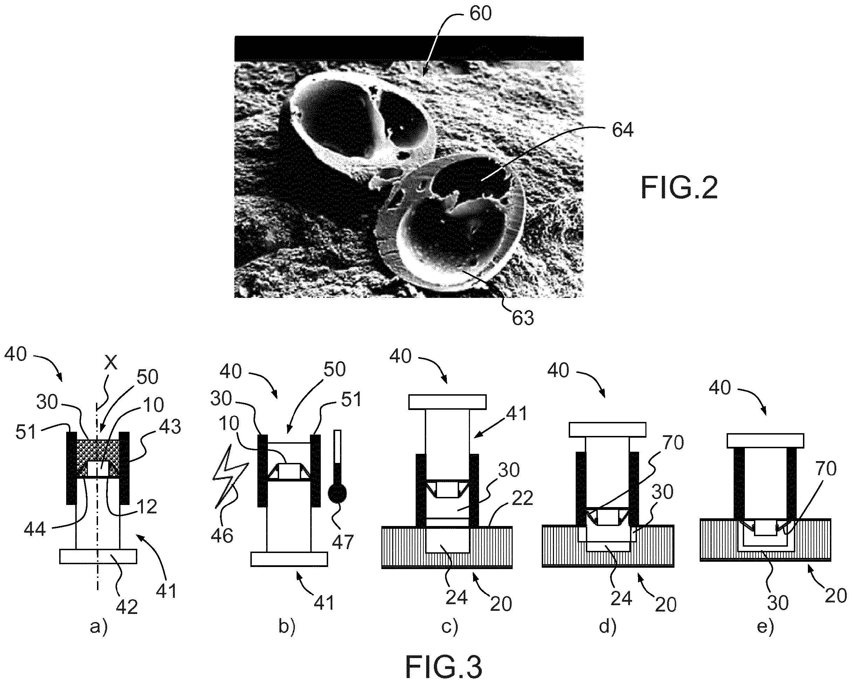

La figure 2 représente un exemple de composant micro-encapsulé. Sur la figure, une micro-capsule 60 ou micro-sphère a été ouverte en deux demi-sphères, permettant de visualiser la structure interne de la micro-capsule. La micro-capsule 60 peut comprendre une ou plusieurs alévoles 63 et 64 encapsulant un composant. Il est envisagé par la présente invention de mettre en oeuvre une colle bi-composants micro-encapsulée. Ainsi, la colle est constituée d'une part de micro-capsules de résine polymérisable, et d'autre part de micro-capsules de durcisseur. Le colle micro-encapsulée se présente alors sous forme d'une poudre, formée du mélange de microcapsules de résine et de durcisseur.

La forme pulvérulente et non polymérisée de la colle micro-encapsulée est particulièrement avantageuse car elle permet une manipulation aisée, sans contraintes de viscosité ou de durée de vie. Dans le cadre de la présente invention, la colle peut ainsi être déposée aisément au contact d'un insert à poser et se répartir de manière homogène sans créer de bulle d'air.

Ensuite, la polymérisation de la colle peut être initiée par rupture des micro-capsules permettant de mettre en contact la résine et le durcisseur. Plusieurs méthodes sont envisagées par la présente invention pour la rupture des micro-capsules de résine et de durcisseur. Cela peut être réalisé par élévation de température de la colle micro-encapsulée, entrainant l'ouverture des microcaspules et la mise en contact de la résine et du durcisseur, Cela peut également être réalisé par exposition à un rayonnement électromagnétique, comme par exemple un rayonnement lumineux ultra-violet ou infra-rouge. L'invention peut être mise en oeuvre pour diverses familles de résine et de durcisseur. Il est en particulier envisagé une résine époxyde et un durcisseur de la famille des amines ou des phénols.

La figure 3 illustre un exemple de dispositif et de procédé de pose d'insert selon l'invention. Le dispositif selon l'invention porte sur un véhicule de pose 40 destiné à poser un insert dans un orifice 24 aménagé dans une structure 20. La figure 3 comprend cinq schémas, référencés (a), (b), (c), (d) et (e), représentant le véhicule de pose pour cinq stades consécutifs de la pose de l'insert.

Le véhicule de pose 40 comprend un insert à poser, une colle polymérisable et un applicateur. L'insert à poser peut être de forme quelconque. Dans l'exemple représenté sur la figure 3, il est de forme semblable à l'insert précédemment décrit en figures 1a et 1b. Dans la suite, il porte la même référence 10, et comprend un corps cylindrique 11 et une collerette 12. De même, la colle peut être constituée de divers matériaux et se présenter sous diverses formes. Dans un mode de réalisation privilégié de l'invention, une colle micro-encapsulée 30 telle que précédemment décrite par la figure est mise en oeuvre.

L'applicateur selon l'invention a pour but de recevoir l'insert à poser et la colle, de permettre d'initier la polymérisation de la colle, puis de poser l'insert dans la structure. Là encore, plusieurs modes de réalisation sont envisagés par la présente invention pour l'applicateur. La figure 3 représente un exemple possible d'applicateur fonctionnant à la manière d'une seringue ; l'insert et la colle étant tout d'abord maintenus dans le corps de la seringue, puis déposés dans la structure. Nous allons maintenant décrire de manière détaillée cet exemple d'applicateur. Il est bien entendu que la présente invention ne se limite pas à cette forme particulière de l'applicateur.

L'applicateur 41 comprend un piston 42 et un fourreau 43 dans lequel le piston 42 peut coulisser selon un axe longitudinal X. Le piston 42 peut coulisser dans le fourreau 43 entre deux positions extrêmes :
- une première position, dite position armée, dans laquelle le piston 42 est partiellement inséré dans le fourreau 43 ; le volume interne délimité par le fourreau 43 et le piston ainsi positionné définissant une enceinte ouverte 50 dans laquelle peuvent être maintenus l'insert et la colle, et
- une seconde position, dite position déclenchée, dans laquelle le piston 42 est inséré dans le fourreau 43 de manière à repousser l'insert et la colle hors de l'enceinte ouverte 50.

Le schéma **(a)** représente le véhicule de pose à un premier stade du procédé de pose de l'insert. L'applicateur est en position armée. Dans l'exemple représenté, la collerette 12 de l'insert 10 est positionnée contre la tête 44 du piston 42. Plus précisément, la face de la collerette 12, opposée au corps 11 de l'insert 10, est en contact avec la tête 44 du piston 42. Dans cet exemple, le volume interne du fourreau est sensiblement cylindrique et de diamètre égal, aux jeux près, au diamètre externe du piston également de forme sensiblement cylindrique. De plus, l'applicateur est configuré pour que ce diamètre soit sensiblement égal au diamètre de la collerette 12 de l'insert. Ainsi configuré l'insert 10 se trouve en contact avec le fourreau 43, le long de la périphérie circulaire de la collerette 12.

Dans une mise en oeuvre possible de l'invention, le véhicule de pose comprend des moyens de liaisons entre le piston 42 et l'insert 10. Il est par exemple envisagé de mettre en oeuvre une tige filetée fixée sur la tête 44 du piston 42 qui coopère avec un taraudage aménagé dans l'insert 10. Avantageusement, ce taraudage est le taraudage 12 de l'insert déjà décrit par les figures 1a et 1b, et destiné à la fixation ultérieure d'équipements sur l'insert. La fixation de l'insert sur la tête du piston permet une manipulation sécurisée du véhicule de pose.

Dans cette position armée de l'applicateur, la colle 30 peut être déposée dans l'enceinte ouverte 50. L'insert 10 est au moins partiellement immergé dans la colle 30. Dans le cas d'une colle micro-encapsulée, la colle non polymérisée peut être aisément déposée dans l'enceinte ouverte 50, par exemple par gravité ou injection. En raison de sa faible viscosité, la colle immerge l'insert sans renfermer de bulles d'air.

Le schéma **(b)** représente le véhicule de pose à un second stade du procédé de pose de l'insert. Pour initier la polymérisation de la colle 30, le véhicule de pose 40 peut être exposé temporairement à un rayonnement électromagnétique 46, symbolisé par l'éclair sur le schéma, et/ou à une élévation de température 47, symbolisée par le thermomètre sur le schéma. A l'issue de cette étape d'initiation de la polymérisation, la colle présente une viscosité supérieure et suffisamment élevée pour permettre la manipulation du véhicule de pose sans risque d'éjection de colle hors de l'enceinte ouverte 50.

Le véhicule de pose peut, comme représenté sur le schéma (c), être retourné pour permettre la pose de l'insert sur la face supérieure d'un panneau 20 positionné horizontalement. Il est aussi envisagé la pose de l'insert sur un panneau positionné verticalement.

Le schéma **(c)** représente le véhicule de pose 40 positionné contre la surface externe 22 du panneau 20 au travers de laquelle est aménagé un orifice 24 sensiblement cylindrique. Le diamètre de l'orifice 24 est sensiblement égal au diamètre de la collerette 12 et au diamètre externe du piston 42. Le véhicule de pose 40 est positionné en regard de l'orifice. Autrement dit, le véhicule de pose est positionné de manière à aligner l'axe longitudinal X de coulissement du piston avec l'axe principal de l'orifice 24 sensiblement cylindrique. L'extrémité circulaire 51 du fourreau 43 est en contact avec la surface externe 22 du panneau 20. L'enceinte ouverte 50 du véhicule de pose 40 est positionnée en regard de l'orifice 24 du panneau 20.

Le schéma **(d)** représente le véhicule de pose dans une position intermédiaire entre la position armée et la position déclenchée. Le piston 42 pénètre partiellement dans le fourreau 43 en repoussant l'insert 10 et la colle 30 dans l'orifice 24. En raison de la structure en nid d'abeille du panneau 20, l'orifice 24 ne présente pas une forme strictement cylindrique ; des alvéoles du nid d'abeille étant partiellement ouvertes communiquant avec l'ouverture cylindrique obtenue généralement par usinage du panneau. Le déplacement du piston 42 repousse la colle 30 dans l'orifice 24 et dans ces alvéoles communiquant avec l'orifice. Comme représenté sur les schémas (d) et (e), une partie de la colle 30 est ainsi déposée dans le panneau au-delà du volume délimité par le diamètre externe du piston 42.

Le schéma **(e)** représente le véhicule de pose dans la position déclenchée. L'insert 10 et la colle 30 sont repoussés entièrement hors de l'enceinte ouverte 50 par le piston 42. Grâce aux alvéoles ouvertes communiquant avec l'orifice, la colle 30 est déposée dans le panneau en entourant l'insert, contribuant à une fixation robuste de l'insert dans le panneau. Comme représenté sur la figure 2, l'insert et l'applicateur peuvent être configurés pour poser l'insert de manière affleurante à la surface externe 22 du panneau 20. A cet effet, le piston 42 en position déclenchée affleure l'extrémité 51 du fourreau 43 en contact avec le panneau 20.

Comme représenté sur la figure 2, l'insert 10 peut également comprendre des moyens de positionnement 70 destinés à assurer le maintien en position de l'insert 10 dans l'orifice 24. Ces moyens de positionnement 70 peuvent par exemple comprendre un mécanisme à ressort monté en compression entre l'insert 10 et le fourreau 43 dans la position armée. Lorsque l'insert 10 est repoussé hors du fourreau 43 par le piston 42 dans la position déclenchée, le mécanisme à ressort se détend et vient prendre appui sous la surface externe 22 du panneau 10. Ces moyens de positionnement 70 n'ont pas vocation à assurer la tenue mécanique de la liaison entre l'insert et le panneau mais à assurer le maintien en position de l'insert pendant le séchage de la colle, après la pose de l'insert.

Dans le cas précédemment décrit où le véhicule de pose comprend des moyens de liaison entre l'insert et la tête du piston, le procédé comprend à l'issue du séchage de la colle, une étape de désolidarisation de l'insert et de la tête du piston.

Nous avons décrit par la figure 3 un exemple de réalisation privilégié de véhicule de pose. Dans cet exemple, l'applicateur 41 présente une forme générale cylindrique à la façon d'une seringue. Il est adapté pour poser un insert 10 dont la collerette est cylindrique, dans un orifice également de forme générale cylindrique. Par ailleurs, dans cet exemple l'ouverture de l'enceinte consiste en une extrémité du fourreau de l'applicateur. Cette mise en oeuvre particulière n'est toutefois pas limitative de la présente invention. L'invention porte plus généralement sur un véhicule de pose dont l'applicateur comprend une enceinte ouverte dans laquelle peuvent être maintenus l'insert et la colle ; et des moyens de déploiement aptes à repousser l'insert et la colle hors de l'enceinte ouverte pour permettre la pose de l'insert dans l'orifice de la structure.

Ce véhicule de pose est particulièrement avantageux car il permet de maitriser l'application et la polymérisation de la colle. La colle peut être déposée dans le véhicule de pose en étant non polymérisée. La polymérisation de la colle est ensuite initiée par une intervention extérieure (élévation de température, exposition à un rayonnement électromagnétique) permettant la mise en contact des deux composants. Il devient possible de stocker de manière durable le véhicule de pose.

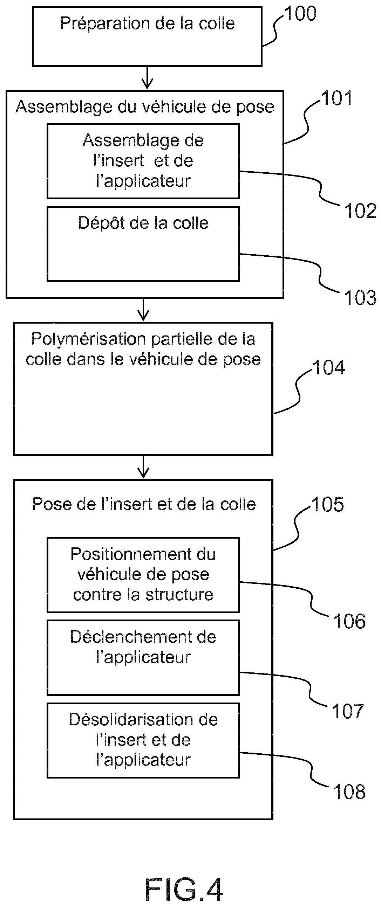

La figure 4 illustre des étapes du procédé de pose d'insert. Le procédé selon l'invention comprend trois étapes principales :
- une première étape 101, consistant à assembler un véhicule de pose 40 comprenant un insert 10, un applicateur 41 et une colle 30,
- une seconde étape 104, consistant à polymériser partiellement la colle 30 dans le véhicule de pose 40, et
- une troisième étape 105, consistant à poser l'insert 10 et la colle 30 dans l'orifice 24 de la structure 20, en déclenchant l'applicateur 41 du véhicule de pose 40 appliqué contre la structure 20.
Le procédé peut également comprendre d'autres étapes. En particulier le procédé peut comprendre une étape préliminaire 100 de préparation de la colle 30. Dans le cas où la colle est micro-encapsulée, cette étape de préparation consiste à micro-encapsuler la colle 30 sous la forme de micro-capsules 60 de résine et de durcisseur.

L'étape 101 d'assemblage du véhicule de pose peut comprendre deux sous-étapes :
- une première sous-étape 102 consistant à fixer l'insert 10 dans l'enceinte ouverte 50 de l'applicateur 41, et
- une seconde sous-étape 103 consistant à déposer la colle 30, par gravité ou par injection, dans l'enceinte ouverte 50 en recouvrant au moins partiellement l'insert 10.

Dans l'exemple décrit sur la figure 3, la première sous-étape 102 comprend le positionnement du piston 42 dans le fourreau 43, en position armée, puis le positionnement et éventuellement la fixation de l'insert 10 contre la tête 44 du piston 42. La seconde sous-étape 103 comprend le dépôt de la colle 30 dans l'enceinte ouverte 50 formée par le fourreau 43 et le piston 42 en position armée. Comme précédemment décrit, la colle peut être déposée sous forme de poudre dans le cas d'une colle micro-encapsulée.

L'étape 104 de polymérisation partielle peut être réalisée dans une étuve dans laquelle est placée une série de véhicules de pose. L'accélération peut être réalisée par une élévation de température au sein de l'étuve. Elle peut également être réalisée au moyen d'un rayonnement électromagnétique par exemple ultra-violet permettant de rompre les micro-capsules de la colle. Le rayonnement électromagnétique peut être dirigé vers la colle au travers de l'ouverture de l'enceinte 50 des véhicules de pose. Il peut également être dirigé vers la colle en traversant des composants du véhicule. Par exemple, le fourreau 43 et/ou le piston 42 peuvent être réalisés dans un matériau transparent au rayonnement pour permettre la polymérisation de la colle.

L'étape 105 de pose de l'insert et de la colle peut comprendre plusieurs sous-étapes, en particulier :
- une première sous-étape 106 consistant à positionner le véhicule de pose contre le panneau. Divers moyens sont envisagés pour permettre de positionner l'insert 10 en regard de l'orifice 24 de la structure. Dans un procédé automatisé, il est envisagé de mettre en oeuvre un robot de positionnement supportant un ou plusieurs véhicules de pose et un ou plusieurs systèmes de vision.
- une seconde sous-étape 107 consistant à déclencher l'applicateur 41 en faisant coulisser le piston de la position armée à la position déclenchée. Au cours de cette sous-étape, l'insert 10 et la colle 30 sont repoussés de l'enceinte ouverte 50 vers l'orifice 24 de la structure. Avantageusement, cette étape peut aussi être automatisée.
- une troisième sous-étape 108 consistant à désolidariser l'insert 10 du piston 42 du véhicule de pose 40. Dans le cas où les moyens de fixation 60 sont une tige filetée sur la tête du piston et un taraudage dans l'insert, cette sous-étape consiste à dévisser la tige filetée du taraudage.

Il est aussi envisagé d'autres étapes ultérieures, pouvant être automatisées comme les précédentes. En particulier, une étape de test de résistance mécanique de l'insert posé dans la structure peut être réalisée à l'issue du séchage de la colle. Une étape de recyclage des véhicules de pose est aussi envisagée. A l'issue de l'étape 105 de pose de l'insert, l'applicateur 41 peut être récupéré puis réutilisé, par positionnement du piston en position armée, positionnement et éventuellement fixation de l'insert puis dépôt de colle dans l'enceinte ouverte.

## Revendications

1. Procédé de pose par collage d'un insert (10) dans un orifice (24) aménagé dans une structure (20), comprenant :
- une première étape (101) consistant à assembler un véhicule de pose (40) comprenant un insert (10) à poser, un applicateur (41) et une colle polymérisable (30),
- une troisième étape (105) consistant à poser l'insert (10) et la colle (30) dans l'orifice (24) de la structure, en déclenchant l'applicateur (41) du véhicule de pose (40) appliqué contre la structure (20),
**caractérisé en ce qu'**il comprend en outre
- une seconde étape (104), exécutée entre la première étape (101) et la troisième étape (105), consistant à initier la polymérisation de la colle (30) dans le véhicule de pose (40),
et **en ce que** l'applicateur comprend
une enceinte ouverte (50) configurée pour maintenir l'insert (10) immergé dans la colle (30) avant initiation de la polymérisation, et
des moyens de déploiement (42) configurés pour repousser l'insert (10) et la colle (30) hors de l'enceinte ouverte (50) dans l'orifice (24) de la structure (20) au cours de la troisième étape (105).

2. Procédé selon la revendication 1, dans lequel la colle (30) est une colle bi-composants comprenant une résine (63) et un durcisseur (64) dont la mise en contact avec la résine (63) permet d'initier la polymérisation de la colle (30).

3. Procédé selon la revendication 2, comprenant une étape préliminaire (100) de micro-encapsulation de la colle (30), sous la forme de micro-capsules (60) de résine et de durcisseur ; la seconde étape (104) de polymérisation de la colle (30) étant initiée par rupture des micro-capsules (60) permettant de mettre en contact la résine et le durcisseur.

4. Procédé selon l'une des revendications 2 ou 3, dont la seconde étape (104) de polymérisation est initiée par élévation de température du véhicule de pose (40).

5. Procédé selon l'une des revendications 2 à 4, dont la seconde étape (104) est initiée par exposition du véhicule de pose (40) à un rayonnement électromagnétique.

6. Procédé selon la revendication 5, dont le rayonnement électromagnatique est un rayonnement ultra-violet.

7. Procédé selon l'une des revendications précédentes, dont la première étape (101) d'assemblage du véhicule de pose (40) comprend une première sous-étape (102) consistant à fixer l'insert (10) dans une enceinte ouverte (50) de l'applicateur (41) ; et une seconde sous-étape (103) consistant à déposer la colle (30) dans l'enceinte ouverte (50) en recouvrant au moins partiellement l'insert (10).

8. Procédé selon l'une des revendications précédentes, comprenant une ou plusieurs étapes (100, 101, 104, 105) automatisées.

9. Véhicule de pose destiné à poser un insert (10) dans un orifice (24) aménagé dans une structure (20), comprenant l'insert (10) à poser, une colle polymérisable (30), et un applicateur (41),
**caractérisé en ce que** l'applicateur comprend :
- une enceinte ouverte (50) configurée pour maintenir l'insert (10) immergé dans la colle (30) avant initiation de la polymérisation;
- des moyens de déploiement (42) configurés pour repousser l'insert (10) et la colle (30) hors de l'enceinte ouverte (50) dans l'orifice (24) de la structure ;
et **en ce que** le véhicule de pose (40) est configuré pour permettre d'initier la polymérisation de la colle (30) maintenue dans l'enceinte ouverte (50) de l'applicateur (41) .

10. Véhicule de pose selon la revendication 9, dans lequel la colle (30) est une colle bi-composants comprenant une résine et un durcisseur dont la mise en contact avec la résine permet d'initier la polymérisation de la colle (30).

11. Véhicule de pose selon la revendication 10, dont la colle (30) est micro-encapsulée sous la forme de micro-capsules (60) de résine et de durcisseur; la polymérisation de la colle (30) pouvant être initiée par rupture des micro-capsules (60) permettant de mettre en contact la résine et le durcisseur.

12. Véhicule de pose selon l'une des revendications 10 ou 11, configuré pour permettre une élévation de température de la colle (30) dans l'enceinte ouverte (50) de l'applicateur (41) apte à initier la polymérisation de la colle (30).

13. Véhicule de pose selon l'une des revendications 10 à 12, configuré pour permettre une exposition de la colle (30) dans l'enceinte ouverte (50) de l'applicateur (41) à un rayonnement électromagnétique apte à initier la polymérisation de la colle.

14. Véhicule de pose selon la revendication 13, dont le rayonnement électromagnétique est un rayonnement ultra-violet.

## Patentansprüche

1. Verfahren zum Verlegen durch Verklebung eines Einsatzes (10) in einer in einer Struktur (20) gebildeten Öffnung (24), folgende Schritte beinhaltend:
- einen ersten Schritt (101), bestehend in der Montage eines Verlegetransportmittels (40), beinhaltend einen zu verlegenden Einsatz (10), einen Applikator (41) und einen polymerisierbaren Klebstoff (30),
- einen dritten Schritt (105), bestehend im Verlegen eines Einsatzes (10) und des Klebstoffs (30) in der Öffnung (24) der Struktur, durch Auslösen des Applikators (41) des Verlegetransportmittels (40), welches gegen die Struktur (20) appliziert ist,
**dadurch gekennzeichnet, dass** es zudem folgende Schritte beinhaltet:
- einen zweiten Schritt (104), ausgeführt zwischen dem ersten Schritt (101) und dem dritten Schritt (105), bestehend im Initiieren der Polymerisierung des Klebstoffs (30) im Verlegetransportmittel (40),
und dadurch, dass der Applikator Folgendes beinhaltet:
eine offene Einhausung (50), konfiguriert zum Halten des in den Klebstoff (30) getauchten Einsatzes (10) vor Initiierung der Polymerisierung, und Mittel zum Entfalten (42), konfiguriert zum Zurückschieben des Einsatzes (10) und des Klebstoffs (30) aus der offenen Einhausung (50) in die Öffnung (24) der Struktur (20) im Zuge des dritten Schrittes (105).

2. Verfahren nach Anspruch 1, bei welchem der Klebstoff (30) ein Zweikomponentenklebstoff ist, beinhaltend ein Harz (63) und einen Härter (64), dessen Inkontaktbringen mit dem Harz (63) die Initiierung der Polymerisierung des Klebstoffs (30) ermöglicht.

3. Verfahren nach Anspruch 2, beinhaltend einen vorbereitenden Schritt (100) der Mikroverkapselung des Klebstoffs (30), in Form von Harz- und Härter-Mikrokapseln (60); wobei der zweite Schritt (104) der Polymerisierung des Klebstoffs (30) durch Zerbrechen der Mikrokapseln (60) initiiert wird, wodurch das Harz und der Härter in Kontakt gebracht werden.

4. Verfahren nach einem der Ansprüche 2 oder 3, bei welchem der zweite Schritt (104) der Polymerisierung durch Temperaturanstieg des Verlegetransportmittels (40) initiiert wird.

5. Verfahren nach einem der Ansprüche 2 bis 4, bei welchem der zweite Schritt (104) durch Exposition des Verlegetransportmittels (40) gegenüber einer elektromagnetischen Strahlung initiiert wird.

6. Verfahren nach Anspruch 5, bei welchem die elektromagnetische Strahlung eine ultraviolette Strahlung ist.

7. Verfahren nach einem der vorhergehenden Ansprüche, bei welchem der erste Schritt (101) der Montage des Verlegetransportmittels (40) einen ersten Unterschritt (102) beinhaltet, bestehend im Befestigen des Einsatzes (10) in einer offenen Einhausung (50) des Applikators (41); und einen zweiten Unterschritt (103), bestehend im Auftragen des Klebstoffs (30) in der offenen Einhausung (50) durch mindestens teilweises Bedecken des Einsatzes (10).

8. Verfahren nach einem der vorhergehenden Ansprüche, beinhaltend einen oder mehrere automatisierte(n) Schritt(e) (100, 101, 104, 105).

9. Verlegetransportmittel, bestimmt zum Verlegen eines Einsatzes (10) in einer in einer Struktur (20) gebildeten Öffnung (24), beinhaltend den zu verlegenden Einsatz (10), einen polymerisierbaren Klebstoff (30) und einen Applikator (41),
**dadurch gekennzeichnet, dass** der Applikator Folgendes beinhaltet:
- eine offene Einhausung (50), konfiguriert zum Halten des in den Klebstoff (30) getauchten Einsatzes (10) vor Initiierung der Polymerisierung;
- Mittel zum Entfalten (42), konfiguriert zum Zurückschieben des Einsatzes (10) und des Klebstoffs (30) aus der offenen Einhausung (50) in die Öffnung (24) der Struktur (20);
und dadurch, dass das Verlegetransportmittel (40) konfiguriert ist, um die Initiierung der Polymerisierung des Klebstoffs (30) zu ermöglichen, welcher in der offenen Einhausung (50) des Applikators (41) gehalten wird.

10. Verlegetransportmittel nach Anspruch 9, bei welchem der Klebstoff (30) ein Zweikomponentenklebstoff ist, beinhaltend ein Harz und einen Härter, dessen Inkontaktbringen mit dem Harz die Initiierung der Polymerisierung des Klebstoffs (30) ermöglicht.

11. Verlegetransportmittel nach Anspruch 10, bei welchem der Klebstoff (30) in Form von Harz- und Härter-Mikrokapseln (60) mikroverkapselt ist; wobei die Polymerisierung des Klebstoffs (30) durch Zerbrechen der Mikrokapseln (60) initiiert werden kann, wodurch das Harz und der Härter in Kontakt gebracht werden.

12. Verlegetransportmittel nach einem der Ansprüche 10 oder 11, konfiguriert, um einen Temperaturanstieg des Klebestoffs (30) in der offenen Einhausung (50) des Applikators (41) zu ermöglichen, welcher in der Lage ist, die Polymerisierung des Klebstoffs (30) zu initiieren.

13. Verlegetransportmittel nach einem der Ansprüche 10 bis 12, konfiguriert, um eine Exposition des Klebestoffs (30) in der offenen Einhausung (50) des Applikators (41) gegenüber einer elektromagnetischen Strahlung zu ermöglichen, welche in der Lage ist, die Polymerisierung des Klebstoffs zu initiieren.

14. Verlegetransportmittel nach Anspruch 13, bei welchem die elektromagnetische Strahlung eine ultraviolette Strahlung ist.

## Claims

1. Method for fitting an insert (10) by adhesively bonding in an orifice (24) formed in a structure (20), comprising:
- a first step (101) which involves assembling a fitting vehicle (40) comprising an insert (10) to be fitted, an applicator (41) and a polymerisable adhesive (30),
- a third step (105) which involves fitting the insert (10) and the adhesive (30) in the orifice (24) of the structure by triggering the applicator (41) of the fitting vehicle (40) applied to the structure (20),
**characterised in that** it further comprises
- a second step (104) which is carried out between the first step (101) and the third step (105) and which involves initiating the polymerisation of the adhesive (30) in the fitting vehicle (40),
and **in that** the applicator comprises
an open enclosure (50) which is configured to maintain the insert (10) immersed in the adhesive (30) prior to the initiation of the polymerisation, and
deployment means (42) which are configured to push back the insert (10) and the adhesive (30) out of the open enclosure (50) into the hole (24) of the structure (20) during the third step (105).

2. Method according to claim 1, wherein the adhesive (30) is a two-component adhesive comprising a resin (63) and a hardener (64), the bringing of which into contact with the resin (63) allows the polymerisation of the adhesive (30) to be initiated.

3. Method according to claim 2, comprising a preliminary step (100) of microencapsulating the adhesive (30), in the form of microcapsules (60) of resin and hardener; the second step (104) of polymerisation of the adhesive (30) being initiated by rupturing of the microcapsules (60), allowing the resin and the hardener to be brought into contact.

4. Method according to either claim 2 or 3, wherein the second step (104) of polymerisation is initiated by the temperature of the fitting vehicle (40) being raised.

5. Method according to any one of claims 2 to 4, wherein the second step (104) is initiated by the fitting vehicle (40) being exposed to electromagnetic radiation.

6. Method according to claim 5, wherein the electromagnetic radiation is ultraviolet radiation.

7. Method according to any one of the preceding claims, wherein the first step (101) of assembling the fitting vehicle (40) comprises a first substep (102) which involves fixing the insert (10) in an open enclosure (50) of the applicator (41); and a second substep (103) involving depositing the adhesive (30) in the open enclosure (50), at least partially covering the insert (10).

8. Method according to any one of the preceding claims, comprising one or more automated step(s) (100, 101, 104, 105).

9. Fitting vehicle intended to fit an insert (10) in an orifice (24) formed in a structure (20), comprising the insert (10) to be fitted, a polymerisable adhesive (30) and an applicator (41),
**characterised in that** the applicator comprises:
- an open enclosure (50) which is configured to maintain the insert (10) immersed in the adhesive (30) before initiation of the polymerisation;
- deployment means (42) which are configured to push back the insert (10) and the adhesive (30) out of the open enclosure (50) into the orifice (24) of the structure;
and **in that** the fitting vehicle (40) is configured to allow the polymerisation of the adhesive (30) retained in the open enclosure (50) of the applicator (41) to be initiated.

10. Fitting vehicle according to claim 9, wherein the adhesive (30) is a two-component adhesive comprising a resin and a hardener, the bringing of which into contact with the resin allows the polymerisation of the adhesive (30) to be initiated.

11. Fitting vehicle according to claim 10, wherein the adhesive (30) is microencapsulated in the form of microcapsules (60) of resin and hardener; it being possible for the polymerisation of the adhesive (30) to be initiated by rupturing of the microcapsules (60) allowing the resin and the hardener to be brought into contact.

12. Fitting vehicle according to either claim 10 or 11, configured to allow the temperature of the adhesive (30) in the open enclosure (50) of the applicator (41) to be raised, the raising being able to initiate the polymerisation of the adhesive (30).

13. Fitting vehicle according to any one of claims 10 to 12, configured to allow the adhesive (30) in the open enclosure (50) of the applicator (41) to be exposed to electromagnetic radiation which is able to initiate the polymerisation of the adhesive.

14. Fitting vehicle according to claim 13, wherein the electromagnetic radiation is ultraviolet radiation.
